# EUROPEAN PATENT SPECIFICATION

(11) **EP 4 491 486 B1**
(45) Date of publication and mention of the grant of the patent: **10.09.2025**
(21) Application number: 23185573.5
(22) Date of filing: 14.07.2023
(51) Int. Cl.: B61D 15/12, B61F 13/00, B60B 17/00, B60B 19/12, B60B 19/00

(54) **AN UNDERCARRIAGE MAINTENANCE VEHICLE AND A METHOD FOR MOVING ALONG A RAIL TRACK USING THE UNDERCARRIAGE MAINTENANCE VEHICLE**
FAHRWERKWARTUNGSFAHRZEUG UND VERFAHREN ZUM BEWEGEN ENTLANG EINER SCHIENE UNTER VERWENDUNG DES FAHRWERKWARTUNGSFAHRZEUGS
VÉHICULE DE MAINTENANCE DE TRAIN DE ROULEMENT ET PROCÉDÉ DE DÉPLACEMENT LE LONG D'UNE VOIE FERRÉE À L'AIDE DU VÉHICULE DE MAINTENANCE DE TRAIN DE ROULEMENT

(43) Date of publication of application: 15.01.2025
(73) Proprietor: DTEC GmbH, 61191 Rosbach v.d. Höhe (DE)
(72) Inventor: ZHANG, Yu, 61440 Oberursel (DE); PENG, Chaoyong, 61440 Oberursel (DE); GUO, Jianguang, 61352 Bad Homburg (DE); ZHANG, Bin, 60439 Frankfurt am Main (DE); ZHANG, Zhaoyuan, 61169 Friedberg (DE)
(74) Representative: Keil & Schaafhausen Patentanwälte PartGmbB

(56) References cited:
- EP-A1- 3 192 716
- EP-B1- 3 519 269
- WO-A1-2023/006184

## Description

The present invention relates to an undercarriage maintenance vehicle for the maintenance and/or inspection of the underbody of e.g. trains. Further, the invention relates to a method for moving along a rail track using said undercarriage maintenance vehicle.

An undercarriage maintenance vehicle that is movable on a given rail track may comprise: a platform having a width narrower than the gauge of the rail track, a maintenance unit coupled to the platform and configured to perform service operations at the underbody of trains, at least two pairs of support arms each comprising a support wheel that is configured to freely rotate around a rotational axis and an active wheel that is configured to rotate around a rotational axis. The support arms may extend substantially in the width direction, which is, when used in a track system, perpendicular to the rail track, wherein the support arms are arranged to couple the support wheels and the active wheels to the platform and wherein at least two active wheels are motorized driven wheels which are located spaced apart from each other along the length of the platform.

Undercarriage maintenance vehicles for the maintenance of the underbody of trains have been devised in the prior art. For instance, EP 3 519 269 B1 discloses a self-propelled apparatus for the on-condition maintenance of the underbody of trains movable on a rail track. Said apparatus comprises a platform with movement organs, wherein the movement organs include an active group of at least four rolling bodies that are constrained to the platform and are configured to roll on the inner profile of the shank of the rail, and a passive group of at least four rolling bodies that are rigidly constrained to the platform and are configured to roll on the foot of the rail. The passive group is configured to avoid interference with a fixing member that is disposed at the foot of the rail. Since at least one of the active wheels per side of the platform is motorized, the platform can be moved below a train in a section of the track comprising fixing members at the foot of the rail.

The maintenance of trains is commonly carried out in purpose-built track sections or in maintenance hangars with such track sections. These track sections are designed to be used by a prior art maintenance vehicle and therefore contain only few attachments such as fixing members at the foot of the rail. However, the construction and operation of such maintenance sites is time consuming and expensive compared to the operation on a conventional track section, which comprises numerous attachments such as fixing members and rail connecting plates at the inner profile of the shank of the rail. When used on a conventional track section a maintenance vehicle according to the prior art is prone to collide with fixing members and rail connecting plates at the inner shank of the rail. Said collisions may damage the maintenance vehicle or prevent it from progressing along the track section and thus prevent maintenance of the train located there above.

Therefore, in view of the foregoing shortcomings, it is an object of the present invention to provide an undercarriage maintenance vehicle which is able to better avoid obstacles on the rails and in the vicinity of the rails.

This object is solved by an undercarriage maintenance vehicle as defined in claim 1 and by a method as defined in claim 13. According to an aspect of the present disclosure, the active wheels are configured to contact a foot of a rail of the rail track, the support wheels are configured to contact an underside of a rail head of the rail, wherein a retraction mechanism is provided for each support arm configured to retract the support arms towards the platform.

The support arms contact the inner profile of the rail at the foot of the rail with the active wheels, and the underside of the head of the rail with the support wheels, which ensures sufficient contact between the wheels and the rail for safe and efficient propulsion. In addition, on substantially level ground, the weight of the undercarriage maintenance vehicle rests on the active wheels, which further improves traction of the active wheels. By contacting the rail at the foot of the rail and at the bottom of the rail head, interference with a wheel of a train standing or moving on the rail is prevented. This allows the maintenance vehicle to move independently of a train located on the rail.

In addition, the support arms of the maintenance vehicle can be retracted towards the platform. Thus, when the maintenance vehicle is moved along the rail track, each one of the support arms can reversibly be moved towards the platform, so that the support arm is no longer in contact with the rail. In other words, it is possible to retract and/or extend each support arm individually and independent from the other support arms. This is particularly advantageous when an attachment of the rail is in the movement path along the rail of a support arm. In such a case the support arm can be retracted, so that further movement along the rail does not cause the support arm to collide with the attachment of the rail. By moving the maintenance vehicle along the rail track, the attachment can subsequently be passed, and, in the following, the support arm can be extended again so that the contact between the support arm and the rail is re-established. The support arms can be retracted and extended independently of each other. This makes it possible to pass an obstacle as described above first with one support arm and then with another support arm. The retractable arrangement of the support arms allows the maintenance vehicle to avoid rail attachments and thus to be moved on rail sections comprising said rail attachments. Furthermore, the simultaneous retraction of all support arms allows easy removal of the maintenance vehicle from the rail track, as the contact between the wheels of the maintenance vehicle and the two rails of the rail track is released.

According to another aspect of the present invention, the maintenance unit may comprise an inspection system suitable to perform an inspection of the under body of trains. The arrangement of an inspection system enables the maintenance vehicle to collect information about the condition of the train to be inspected. An inspection system may, for example, be formed by a sensor system and/or a camera system that records the underbody of the train and evaluates the recordings made. By using such information, it may be possible to make a comparison between a desired condition and an actual condition of the underbody of the train and thus to detect a possible need for maintenance. In a preferred embodiment, the inspection system may further comprise a movement device configured to move the inspection system. Since the underbody of trains is usually lined with many components, the arrangement of a movement device allows the inspection system to be moved so that all areas of the underside of the train can be inspected. In addition, the arrangement of a movement device may allow the inspection system to be moved in proximity to selected locations for closer inspection. Such a movement device may be, for example, a linear actuator, a movable arm or the like.

The maintenance unit may further comprise a manipulation system configured to interact mechanically with the underbody of trains. In other words, the manipulation system may enable the maintenance vehicle to interact mechanically with components at the underbody of the train. This allows service operations to be carried out on the train, which may involve mechanical checks by probing or may also involve replacement work or repair work. The manipulation system may be formed by one or more tools, these tools preferably being arranged in a movable manner. In this context, movable may imply rotatable, or may imply movable in one or more spatial directions. Furthermore, a combination of these forms of movement may also be possible. In a preferred embodiment, the manipulation system may be moved by the movement device.

In one embodiment, the undercarriage maintenance vehicle may further comprise a detection unit configured to detect obstacles in the proximity of the undercarriage maintenance vehicle. Said detection unit may detect possible obstacles such as rail attachments. The detection unit may be formed by sensors and/or cameras that are set up to collect information about the surroundings. Such sensors can be for example tactile sensors or contactless sensors. Especially in the case of contactless sensors it may be possible to detect obstacles in a distance of several meters. The detection unit may be particularly advantageous if obstacles are arranged irregularly on the rail track, as in this case it is not possible to conclude that an obstacle is approaching only by the distance between a previous obstacle and a travelled distance. In a particularly preferred embodiment, the detection unit may be integrated into the inspection unit.

Preferably, the retraction mechanism may comprise a telescopic section that is adjustable in its total length. Such a telescopic section may comprise at least two segments which can be moved into each other in such a way that the total length of the telescopic section is reduced. By arranging a telescopic section, the retraction mechanism can be implemented in a space-saving manner. In addition, the compactness of the telescopic section may allow the wheels of the support arms to be retracted farther, so that attachments to the rail can be circumvented more easily.

According to another aspect of the present invention, each support arm may further comprise a vibration dampening means configured to dampen vibrations transmitted from the active wheel and the support wheel to the platform and vice versa. During the movement along the rail track, vibrations may occur due to the contact between the wheels, i.e. the active wheels and the support wheels, and the rail. The vibration dampening means may reduce or absorb entirely said vibrations. Such a vibration dampening means may be, for example, a shock absorber, a damping elastic material or the like. In this way, vibrations may be prevented from being transmitted to the platform via the support arms, thereby negatively affecting the maintenance of the train and/or the inspection of the train. Furthermore, the smooth running and track stability of the maintenance vehicle may be increased.

In one embodiment, the vibration dampening means may further be configured to press the support arm against the rail, when the undercarriage maintenance vehicle is used in a track system. In that way sufficient contact between the active wheel and the support wheel of the support arm and the rail may be provided.

According to another aspect of the present disclosure, the undercarriage maintenance vehicle may comprise at least three pairs of support arms, wherein at least two active wheels that are located spaced apart along the length of the platform are motorized driven wheels. A pair of support arms may be formed by two support arms extending in the width direction of the platform, one support arm being located on one length side of the platform and another support arm being located on the other length side of the platform. A pair of support arms may be arranged at substantially the same distance in the length direction of the platform. The arrangement of another pair of support arms increases the number of contact points with the rail and thus improves track stability. Furthermore, tilting of the platform may be prevented while a pair of support arms is retracted. In a state where a pair of support arms is retracted, the maintenance vehicle may still be moved because at least two active wheels are driven on each side of the platform. Thus, at least one driven active wheel per side remains in contact with the rail, allowing the maintenance vehicle to retract a pair of support arms simultaneously and continue to be movable along the rail track. The number of support arms is not limited to an even number. Thus, as an alternative to the provision of two or three pairs of support arms, the undercarriage maintenance vehicle may comprise five or seven support arms which may be arranged spaced from each other along the length of the platform.

In one embodiment, the distance between the active wheels and the support wheels of consecutive support arms along the length of the platform may be at least 0.5 meters. Along a rail track, large attachments may be provided either on one side or on both sides of the rail track, which may pose an obstacle to the maintenance vehicle. Such attachments are formed, for example, by rail connectors, which are usually provided on both sides of the rail track and connect individual segments of the rail track to each other. The particular spacing of the support arms along the length of the platform may enable to retract a pair of support arms, to pass said obstacle with the retracted pair of support arms and to extend said pair of support arms again without the subsequent pair of support arms contacting the obstacle.

In one embodiment, the platform may be formed by a first part comprising at least two pairs of support arms and by a second part comprising at least one pair of support arms. The partitioning of the platform into a first part and a second part may allow the maintenance vehicle to be designed variably. For example, the first part may comprise driven active wheels and the second part may not comprise drive active wheels. By designing the platform in this way, manufacturing can be simplified and thus costs can be reduced.

Preferably a connection mechanism between the first part of the platform and the second part of the platform may be configured to fold the second part of the platform on top of the first part of the platform. The provision of a connecting mechanism which makes the first part of the platform and the second part of the platform foldable may allow to reduce the space requirement of the platform. Furthermore, the platform may be stowed and stored in the folded state to save space. Furthermore, it may for example possible to operate the maintenance vehicle in the folded state for maintenance when it is not necessary that the second part is in contact with the rail track.

In one embodiment, the first part of the platform and the second part of the platform are configured to be releasably attachable to each other. Due to the detachability of the first part and the second part of the platform, the number of wheels of the maintenance vehicle may be varied as required. For example, it may be possible to operate a maintenance vehicle with four support arms and expand it to six or more support arms by connecting the second part.

The above defined problem is further solved by a method for moving along a rail track, preferably using an undercarriage maintenance vehicle as defined above in a rail track comprising two rails extending substantially parallel to each other and spaced by the gauge of the rail track with a rail attachment member or the like obstacle being disposed at one of the rails, the method comprising the following steps:
S1: The undercarriage maintenance vehicle approaches the attachment member and, optionally, stops the movement in the immediate vicinity of the attachment member;
S2: The undercarriage maintenance vehicle retracts a first support arm that is located closest to the attachment member;
S3: The undercarriage maintenance vehicle moves in a forward direction and, optionally, stops when a subsequent support arm is in the immediate vicinity of the attachment member;
S4: The undercarriage maintenance vehicle extends the currently retracted support arm;
S5: The undercarriage maintenance vehicle retracts the subsequent support arm;
S6: The undercarriage maintenance vehicle moves in the forward direction and, optionally, stops when the currently retracted support arm can be extended without interference with the attachment member;
S7: The undercarriage maintenance vehicle repeats steps S4 to S6 for each further subsequent support arm.

In other words, the maintenance vehicle can bypass an obstacle located on one side of the track by retracting the support arms on that side and moving the maintenance vehicle forward until the retracted support arm can be safely extended again. This procedure is repeated for each further support arm in the longitudinal direction of the platform until no further support arm has to pass the obstacle. At least three support arms are in contact with the rails at any time, so that the platform does not tip over, and at least one driven active wheel ensures the forward motion of the maintenance vehicle. A subsequent support arm is the support arm that follows the currently retracted support arm in a direction against the forward direction of movement of the platform.

The movement of the maintenance vehicle bypassing a rail attachment member or the like obstacle may be either an intermittent, stepwise movement including stops of the maintenance vehicle prior to retracting and/or extending one or more support arms or, alternatively, may be a substantially continuous movement wherein one or more support arms are retracted and/or extended during movement of the maintenance vehicle. In the latter case, the velocity of the maintenance vehicle may be reduced when approaching a rail attachment member or the like obstacle or may be kept substantially constant.

A method for moving along a rail track using an undercarriage maintenance vehicle with at least three pairs of support arms in a rail track comprising two rails extending substantially parallel to each other and spaced by the gauge of the rail track with a rail attachment member or the like obstacle being disposed at both of the rails, may comprise the following steps:
S1: The undercarriage maintenance vehicle approaches the attachment members on the rails of the rail track and, optionally, stops the movement in the immediate vicinity of the attachment members;
S2: The undercarriage maintenance vehicle retracts a first pair of support arms that are located closest to the attachment members;
S3: The undercarriage maintenance vehicle moves in the forward direction and, optionally, stops when a subsequent pair of support arms is in the immediate vicinity of the attachment members;
S4: The undercarriage maintenance vehicle extends the currently retracted pair of support arms;
S5: The undercarriage maintenance vehicle retracts the subsequent pair of support arms;
S6: The undercarriage maintenance vehicle moves in the forward direction and, optionally, stops when the currently retracted pair of support arms can be extended without interference with the attachment members;
S7: The undercarriage maintenance vehicle repeats steps S4 to S6 for each further subsequent pair of support arms.

The simultaneous retraction of a pair of support arms makes it possible to pass attachments of the rail track which are located on both sides of the rails. At least four support arms, i.e. two pairs of support arms, stay in contact with the rail at any time, so that the maintenance vehicle can be driven by at least two active wheels. Furthermore, tilting of the platform is safely prevented.

According to another aspect of the present disclosure the above methods may comprise a train being located on the rail track, wherein the undercarriage maintenance vehicle services the underbody of the train by means of the maintenance unit when the underbody maintenance vehicle is located beneath the train.

The modifications and advantages described regarding the device apply accordingly with regard to the method and vice versa.

The above and other objects, features and advantages of the present invention will become more apparent from the following description when taken in conjunction with the accompanying drawings, in which preferred embodiments of the present invention are shown by way of an illustrative example. In this context, all the features described and/or illustrated constitute, individually or in any combination, the subject-matter of the invention, irrespective of their summary in the claims or their references.
- Figure 1: shows a perspective view of a first embodiment of an undercarriage maintenance vehicle according to the present invention;
- Figure 2: shows the embodiment of Fig. 1 located in a track system;
- Figure 3: shows a detailed view of the support arm of the embodiment of Fig. 1 in contact with a rail;
- Figure 4: shows an isolated view of parts of the support arm of the embodiment of Fig. 1;
- Figure 5: shows a perspective view of a second embodiment of an undercarriage maintenance vehicle according to the present invention;
- Figure 6: shows the embodiment of Fig. 5 while passing a rail attachment member.

In the figures, identical elements, identically acting elements, or elements of the same kind may be provided with the same reference numerals.

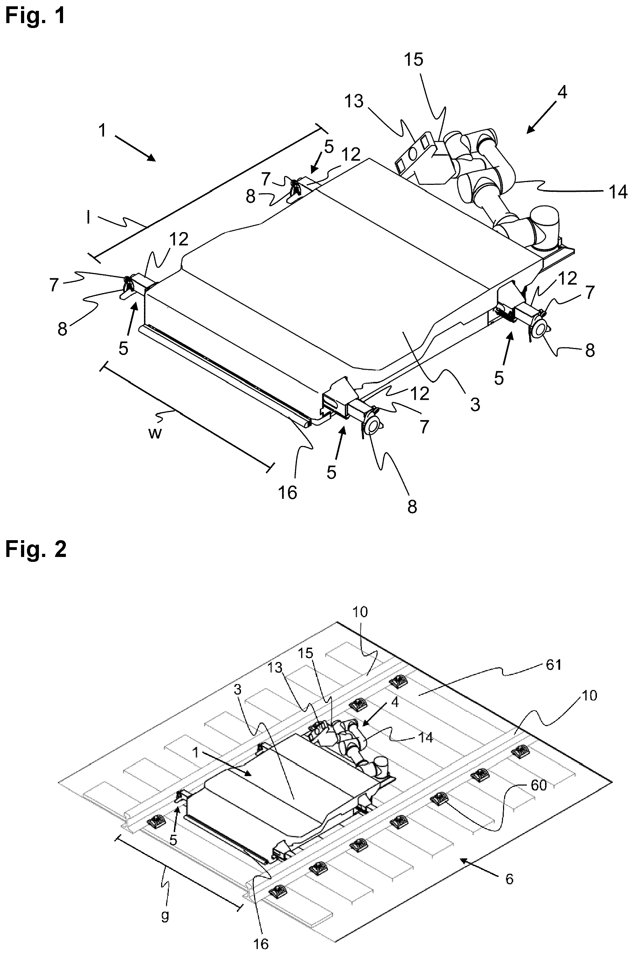

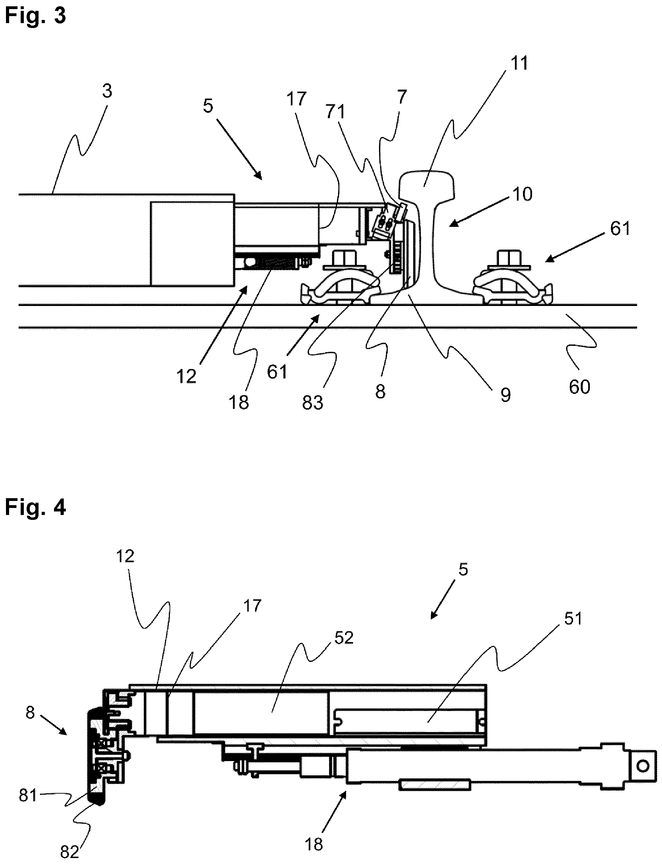

Fig. 1 shows an undercarriage maintenance vehicle 1 according to a first embodiment of the present invention. The maintenance vehicle 1 is formed by a platform 3 having a substantially box-like shape. The platform 3 extends in a length direction with length l and in a width direction with width w. At one end of the platform 3 in the length direction, a support arm 5 projects from each side of the platform 3 in the width direction. These two support arms 5 form a pair of support arms 5. At the other end of the platform in the length direction, another pair of support arms 5 is arranged. The support arms 5 each comprise a retraction mechanism 12, an active wheel 8 and a support wheel 7, which will be described in more detail in connection with Figures 3 and 4 below. A detection unit 16 in the form of a sensor array is arranged at one end in the longitudinal direction of the platform 3. The inspection system 4 is arranged at another end in the longitudinal direction of the platform 3. The inspection system 4 has a motorized arm 14, which has several joints that can be moved relative to each other. The motorized arm 14 is connected to the platform 3 at one end and is equipped with a camera system 13 at the other end. Furthermore, the motorized arm 14 has a tool 15, which is arranged next to the camera system 13 at the free end of the motorized arm 14.

Fig. 2 shows the undercarriage maintenance vehicle 1 shown in Fig. 1 disposed in a track system 6. The track system 6 is comprised of two rails 10, forming the rail track 2, that extend parallel to each other and are spaced apart by the gauge g of the rail track 2. The track system 6 further comprises sleepers 60 that are arranged perpendicular to the rails 10 and to which the rails are fixed by rail fixing members 61. The undercarriage maintenance vehicle 1 is located between the two rails 10 of the rail track 2. The active wheels 8 and the support wheels 7 of the support arms 5 contact the respective rail 10, so that the undercarriage maintenance vehicle 1 can move along the rail track 2. The platform 3 is dimensioned so that it protrudes less than 80 mm above the rail head 11. The inspection system 4 also meets this requirement when in the folded state as shown in Fig. 2.

Fig. 3 shows a detailed view of the support arm 5 in contact with a rail 10. The support arm 5 extends from the platform 3 in the direction of the width of the platform 3. The support arm 5 has a retraction mechanism 12 which enables to reduce the overall length of the support arm 5. The retraction mechanism 12 has a telescopic section 17 which is formed by two elements which can be moved one inside the other. As shown in Fig. 4, the elements of the telescopic section 17 are moved by an electric motor 52 which is also housed in the support arm 5. The electric motor 52 is controlled and supplied with power by a motor controller 51. A damper 18 is arranged below the retraction mechanism 12 and the electric motor 52. The damper 18 is preloaded via a spring so that it presses the support arm 5 towards the rail 2. It also dampens vibrations transmitted along the support arm 5 in the direction of the platform 3 and vice versa. An active wheel 8 is arranged at the end of the support arm 5 remote from the platform 3. The active wheel 8 has a metallic core 81 which is surrounded by a rubber coating 82 as shown in Fig. 4). On the side of the active wheel 8 facing the platform, a gear 83 is arranged which is coupled to a motor (not shown) via a shaft extending in the support arm 5 and is thus actively driven. The support wheel 7 is arranged above the active wheel 8. The support wheel 7 is coupled to the support arm 5 via an adjustment mechanism 71. The adjustment mechanism makes it possible to adjust the position of the support wheel 7 relative to the active wheel 8 and the support arm 5.

The rail 10 comprises a broad foot 9 that extends vertically as a narrow shank and terminates with a broader head section 11 on which the wheels of a bogie may contact the rail 10. The foot 9 of the rail 10 is fixed on either side of the rail 10 by abovementioned rail fixing members 61. The rail shown in Fig. 3 corresponds to the standard rail of EN 13674-1. The support arm 5 with the wheels 7, 8 at its end resembles an L-shape that does not interfere with the rail fixing members 61, when the support arm 5 is extended and in contact with a rail 10 (cf. Fig. 3). The active wheel 8 contacts the rail 10 at the foot 9 of the rail 10 at a position that is close to the shank of the rail 10. The support wheel 7 contacts the rail 10 at the underside of the head 11 of the rail 10.

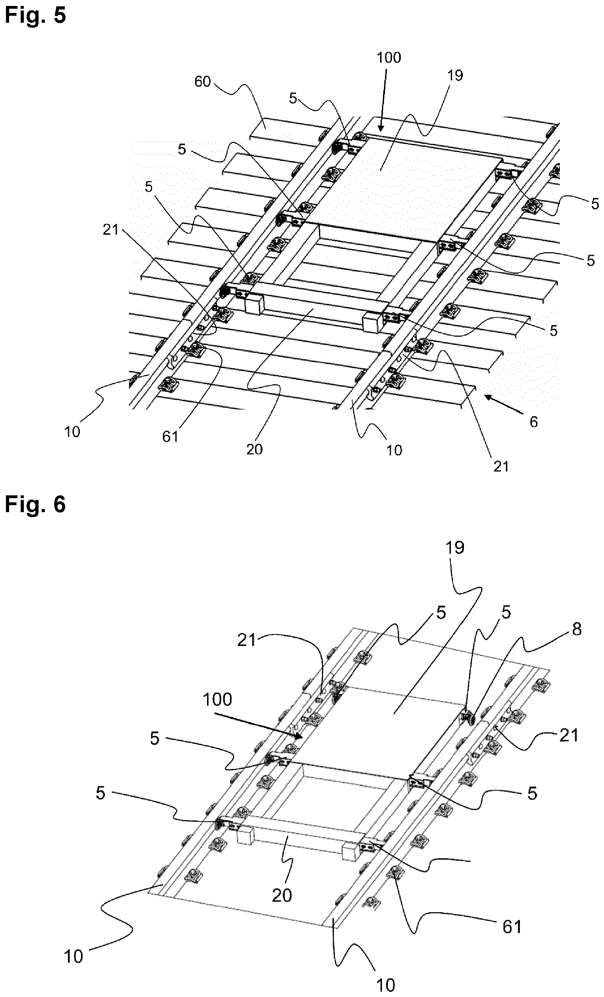

Figures 5 and 6 show a second embodiment of the undercarriage maintenance vehicle 100 according to the present invention. The second embodiment 100 is largely identical to the first embodiment, for which reason reference is made at this point to the description of the first embodiment. In the following, only the differences to the first embodiment will be highlighted and described in detail.

Figure 5 shows the maintenance vehicle 100 in the track 2 of the rail system 6. The second embodiment 100 also comprises a maintenance unit 4 which is not shown in Figures 5 and 6 for reasons of clarity. Compared to the first embodiment 1, the second embodiment 100 comprises an additional pair of support arms 5, so that the second embodiment has three pairs of support arms 5. Two pairs of support arms 5 are arranged on the first part 19 of the platform 3. One pair of support arms 5 is arranged on the second part 20 of the platform 3. The first part 19 of the platform 3 is comparable to the platform 3 of the first embodiment of the maintenance vehicle 1. The second part 20 of the platform 3 is designed as a frame. The second part 20 is detachably connected to the first part 19.

The sections of the rail 2 shown in Figures 5 and 6 comprise rail connectors 21 with which the individual segments of each rail 10 are connected to each other. These rail connectors 21, which are also known in the art as fish plates, have a length of e.g. 820 mm and are screwed at the transition between the segments of the rail 10 to the shank of the rail. The rail connectors 21 protrude so far from the rail shaft that when the maintenance vehicle 100 moves along the rail track 2, the support arms 5, i.e. the active wheels 8 and the support wheels 7 of the support arms 5, collide with the rail connectors 21, when the support arms 5 are not retracted towards the platform 3 of the maintenance vehicle 100.

Fig. 6 shows the maintenance vehicle 100 in a rail track 2, which comprises fish plates 21 on both sides of the rails 10 and the rail track 2. The fish plates 21 are arranged substantially at the same level in the direction of the rail track 2. The first pair of support arms 5, which is located at the level of the fish plates 21, is retracted. The support arms 5 are so far retracted by the retraction mechanism 12 that the support arms 5 do not collide with the fish plates 21. The other two pairs of support arms 5 are extended and drive the maintenance vehicle 100.

With reference to Fig. 6, in the following the sequence is described how the maintenance vehicle 100 passes through an arrangement of fishplates 21 on both sides of the rail track 2. Initially, all support arms 5 are extended and the maintenance vehicle 100 moves in a forward direction along the rail track 2 in a section of the rail track 2 which has no fish plates 21. The maintenance vehicle 100 then approaches the section of the rail track 2 with fish plates 21 arranged on both sides, as shown in Fig. 6. The detection unit 16 registers the approaching fish plates 21 and the motor control of the active wheels 8 brakes the maintenance vehicle 100 so that it comes to a standstill 10 cm in front of the fish plates 21. In the next step, the two support arms 5 that are closest to the fish plates 21 are retracted. The maintenance vehicle 100 then moves forward and passes the fish plates 21 with the first pair of support arms 5 (see Fig. 6). As soon as the fish plates 21 have been passed and the first pair of support arms 5 can be extended without interfering with the fish plates 21, the maintenance vehicle 100 stops and extends the first pair of support arms 5. In the next step, the next pair of support arms 5 is retracted. This is the second pair of support arms 5 located in the middle in the longitudinal direction l of the platform 3. As soon as the second pair of support arms 5 has been retracted, the maintenance vehicle 100 advances so far that the second pair of support arms 5 can be extended without interfering with the fish plates 21, and extends the second pair of support arms 5. This process is repeated for the third and last pair of support arms 5, so that these are first retracted, then the maintenance vehicle 100 moves past the fish plates 21 and the third pair of support arms 5 are extended. The maintenance vehicle 100 can then continue moving in a forward direction along the rail track 2.

However, the maintenance vehicle 1, 100 does not necessarily dependent on the detection unit 16 to detect an approaching obstacle. If obstacles are arranged regularly along the rail track 2, i.e. at a constant distance, the distance covered by the maintenance vehicle 1, 100 can be used to infer approaching obstacles.

In addition to the scenario described above, in which fish plates 21 are arranged on both sides of the rail track 2, a situation can also arise in which an obstacle, such as a fish plate 21, is arranged on only one side of the rail track 2. In the following the sequence is described how the maintenance vehicle 1, 100 passes such an obstacle. As described above, an approaching one-sided obstacle can be inferred from the distance travelled in combination with information about the distance between obstacles along the rail track 2. Alternatively, or in addition thereto, the obstacle can also be detected by the detection unit 16. The maintenance vehicle 1, 100 concludes based on stored information and the travelled distance that there is an approaching fish plate 21 arranged on one side of the rail track 2 and brakes. The maintenance vehicle 1, 100 comes to a standstill 10 cm in front of the fish plate 21 and retracts one support arm 5 which is located closest to the fish plate 21. Subsequently, the maintenance vehicle 1, 100, which contacts the rails 10 of the rail track 2 with at least three support arms 5, moves in the forward direction and passes the fish plate 21 with the retracted support arm 5. The forward movement is stopped when the retracted support arm 5 has passed the fish plate 21 and can be extended without interfering with the fish plate 21. Subsequently, this process is repeated for each further support arm 5 located on this side of the maintenance vehicle 1, 100.

The sequence of the movement processes described above is not limited to this exact order. In principle, it is possible to retract and/or extend multiple support arms simultaneously. It is also possible to invert the movement direction before passing an obstacle. Furthermore, it is also possible to retract and extend the support arms 5 while moving at arbitrarily speeds instead of stopping the maintenance vehicle 1, 100 to extend and/or retract the support arms 5.

### Reference numerals:

- 1: undercarriage maintenance vehicle
- 2: rail track
- 3: platform
- 4: maintenance unit
- 5: support arms
- 6: track system
- 7: support wheel
- 8: active wheel
- 9: foot of the rail
- 10: rail
- 11: head of the rail
- 12: retraction mechanism
- 13: inspection system
- 14: movement device
- 15: manipulation system
- 16: detection unit
- 17: telescopic section
- 18: vibration dampening means
- 19: first part
- 20: second part
- 21: attachment member (fish plate)
- 51: motor controller
- 52: electric motor
- 60: sleeper
- 61: fixing member
- 71: adjustment mechanism
- 81: metallic core
- 82: rubber coating
- 83: gear
- 100: undercarriage maintenance vehicle
- g: gauge of the rail track
- l: length of the platform
- w: width of the platform

## Claims

1. An undercarriage maintenance vehicle (1, 100) for the maintenance of the underbody of trains, wherein the undercarriage maintenance vehicle (1, 100) is configured to be movable on a rail track (2) having two rails (10) which extend parallel to each other and are spaced apart by a gauge (g), the undercarriage maintenance vehicle (1, 100) comprising:
- a platform (3) having a width (w),
- a maintenance unit (4) coupled to the platform (3) and configured to perform service operations at the underbody of trains, and
- located along a length (l) of the platform (3) at least two pairs of support arms (5) extending substantially in the width direction, which is when used in a track system (6) perpendicular to the rail track (2), each support arm (5) comprising:
- a support wheel (7) that is configured to freely rotate around a rotational axis,
- an active wheel (8) that is configured to rotate around a rotational axis,
wherein the support arms (5) are arranged to couple the support wheels (7) and the active wheels (8) to the platform (3),
wherein at least two active wheels (8) are motorized driven wheels, **characterized in that**
the active wheels (8) are configured to contact a foot (9) of a rail (10) of the rail track (2),
the support wheels (7) are configured to contact an underside of a rail head (11) of the rail (10), and
**in that** a retraction mechanism (12) is provided for each support arm (5) configured to retract the support arms (5) towards the platform (3).

2. The undercarriage maintenance vehicle (1, 100) according to claim 1, **characterized in that** the maintenance unit (4) comprises an inspection system (13) suitable to perform an inspection of the under body of trains.

3. The undercarriage maintenance vehicle (1, 100) according to claim 2, **characterized in that** the inspection system (13) further comprises a movement device (14) configured to move the inspection system.

4. The undercarriage maintenance vehicle (1, 100) according to any of the preceding claims, **characterized in that** the maintenance unit (4) comprises a manipulation system (15) configured to interact mechanically with the underbody of trains.

5. The undercarriage maintenance vehicle (1, 100) according to any of the preceding claims, **characterized in that** the undercarriage maintenance vehicle (1, 100) further comprises a detection unit (16) configured to detect a rail attachment member (21) or the like obstacle in the proximity of the undercarriage maintenance vehicle (1, 100).

6. The undercarriage maintenance vehicle (1, 100) according to any of the preceding claims, **characterized in that** the retraction mechanism (12) comprises a telescopic section (17) that is adjustable in its total length.

7. The undercarriage maintenance vehicle (1, 100) according to any of the preceding claims, **characterized in that** each support arm (5) further comprises a vibration dampening means (18) configured to dampen vibrations transmitted from the active wheel (8) and the support wheel (7) to the platform (3) and vice versa.

8. The undercarriage maintenance vehicle (100) according to any of the preceding claims, **characterized in that** the undercarriage maintenance vehicle (100) comprises at least three pairs of support arms (5), wherein at least two active wheels (8) that are located spaced apart along the length (l) of the platform (3) are motorized driven wheels.

9. The undercarriage maintenance vehicle (100) according to claim 8, **characterized in that** the distance between the active wheels (8) and the support wheels (7) of consecutive support arms (5) along the length (l) of the platform (3) is at least 0.5 meters.

10. The undercarriage maintenance vehicle (100) according to claim 8 or 9, **characterized in that** the platform (3) is formed by a first part (19) comprising at least two pairs of support arms (5) and by a second part (20) comprising at least one pair of support arms (5).

11. The undercarriage maintenance vehicle (100) according to claim 10, **characterized in that** a connection mechanism between the first part (19) of the platform (3) and the second part (20) of the platform (3) is configured to fold the second part (20) of the platform (3) on top of the first part (19) of the platform (3).

12. The undercarriage maintenance vehicle (100) according to claim 10 or 11, **characterized in that** the first part (19) of the platform (3) and the second part (20) of the platform (3) are configured to be releasably attachable to each other.

13. A method for moving along a rail track (2) using the undercarriage maintenance vehicle (1, 100) according to any of the claims 1 to 7 and a rail track (2) comprising two rails (10) extending substantially parallel to each other and spaced by the gauge (g) of the rail track (2), wherein a rail attachment member (21) or the like obstacle is disposed at one of the rails (10), the method comprising the following steps:
S1: The undercarriage maintenance vehicle (1, 100) approaches the attachment member (21);
S2: The undercarriage maintenance vehicle (1, 100) retracts a first support arm (5) that is located closest to the attachment member (21);
S3: The undercarriage maintenance vehicle (1, 100) moves in a forward direction;
S4: The undercarriage maintenance vehicle (1, 100) extends the currently retracted support arm (5);
S5: The undercarriage maintenance vehicle (1, 100) retracts the subsequent support arm (5);
S6: The undercarriage maintenance vehicle (1, 100) moves in the forward direction;
S7: The undercarriage maintenance vehicle (1, 100) repeats steps S4 to S6 for each further subsequent support arm (5).

14. A method for moving along a rail track (2) using the undercarriage maintenance vehicle (100) according to any of the claims 8 to 12 and a rail track (2) comprising two rails (10) extending substantially parallel to each other and spaced by the gauge (g) of the rail track (2), wherein a rail attachment member (21) or the like obstacle is disposed at both of the rails (10), the method comprising the following steps:
S1: The undercarriage maintenance vehicle (100) approaches the attachment members (21) on the rails (10) of the rail track (2);
S2: The undercarriage maintenance vehicle (100) retracts a first pair of support arms (5) that are located closest to the attachment members (21);
S3: The undercarriage maintenance vehicle (100) moves in the forward direction;
S4: The undercarriage maintenance vehicle (100) extends the currently retracted pair of support arms (5);
S5: The undercarriage maintenance vehicle (100) retracts the subsequent pair of support arms (5);
S6: The undercarriage maintenance vehicle (100) moves in the forward direction;
S7: The undercarriage maintenance vehicle (100) repeats steps S4 to S6 for each further subsequent pair of support arms (5).

15. A method for moving along the rail track (2) according to claim 13 or 14, **characterized in that** a train is located on the rail track (2), wherein the undercarriage maintenance vehicle (1, 100) services the underbody of the train by means of the maintenance unit (4) when the underbody maintenance vehicle (1, 100) is located beneath the train.

## Patentansprüche

1. Ein Unterflurwartungsfahrzeug (1, 100) zur Wartung des Unterbodens von Zügen, wobei das Unterflurwartungsfahrzeug (1, 100) auf einem Schienenstrang (2) mit zwei parallel zueinander verlaufenden und um eine Spurweite (g) beabstandeten Schienen (10) bewegbar eingerichtet ist, wobei das Unterflurwartungsfahrzeug (1, 100) umfasst:
- eine Plattform (3) mit einer Breite (w),
- eine mit der Plattform (3) gekoppelte Wartungseinheit (4), die zur Durchführung von Wartungsarbeiten am Unterboden von Zügen eingerichtet ist, und
- angeordnet entlang einer Länge (l) der Plattform (3) mindestens zwei Paare von im Wesentlichen in Breitenrichtung verlaufenden Tragarmen (5), die bei Verwendung in einem Gleissystem (6) senkrecht zum Schienenstrang (2) verläuft, wobei jeder Tragarm (5) umfasst:
- ein Abstützrad (7), das so eingerichtet ist, dass es sich frei um eine Drehachse drehen kann,
- ein aktives Rad (8), das so eingerichtet ist, dass es sich um eine Drehachse drehen kann,
wobei die Tragarme (5) so angeordnet sind, dass sie die Abstützräder (7) und die aktiven Räder (8) mit der Plattform (3) koppeln,
wobei mindestens zwei aktive Räder (8) angetriebene Räder sind, **dadurch gekennzeichnet, dass**
die aktiven Räder (8) so eingerichtet sind, dass sie einen Fuß (9) einer Schiene (10) des Schienenstrangs (2) berühren,
die Abstützräder (7) so eingerichtet sind, dass sie eine Unterseite eines Schienenkopfes (11) der Schiene (10) berühren, und
dass für jeden Tragarm (5) ein Einziehmechanismus (12) vorgesehen ist, der so eingerichtet ist, dass er die Tragarme (5) in Richtung der Plattform (3) einzieht.

2. Das Unterflurwartungsfahrzeug (1, 100) nach Anspruch 1, **dadurch gekennzeichnet, dass** die Wartungseinheit (4) ein Inspektionssystem (13) umfasst, das dazu geeignet ist, eine Inspektion des Unterbodens von Zügen durchzuführen.

3. Das Unterflurwartungsfahrzeug (1, 100) nach Anspruch 2, **dadurch gekennzeichnet, dass** das Inspektionssystem (13) ferner eine Bewegungsvorrichtung (14) umfasst, die dazu eingerichtet ist, das Inspektionssystem zu bewegen.

4. Das Unterflurwartungsfahrzeug (1, 100) nach einem der vorstehenden Ansprüche, **dadurch gekennzeichnet, dass** die Wartungseinheit (4) ein Manipulationssystem (15) umfasst, das dazu eingerichtet ist, mechanisch mit dem Unterboden von Zügen zu interagieren.

5. Das Unterflurwartungsfahrzeug (1, 100) nach einem der vorstehenden Ansprüche, **dadurch gekennzeichnet, dass** das Unterflurwartungsfahrzeug (1, 100) ferner eine Detektionseinheit (16) umfasst, die dazu eingerichtet ist, ein Schienenbefestigungselement (21) oder ein ähnliches Hindernis in der Nähe des Unterflurwartungsfahrzeugs (1, 100) zu detektieren.

6. Das Unterflurwartungsfahrzeug (1, 100) nach einem der vorstehenden Ansprüche, **dadurch gekennzeichnet, dass** der Einziehmechanismus (12) einen Teleskopabschnitt (17) umfasst, der in seiner Gesamtlänge verstellbar ist.

7. Das Unterflurwartungsfahrzeug (1, 100) nach einem der vorstehenden Ansprüche, **dadurch gekennzeichnet, dass** jeder Tragarm (5) ferner eine Schwingungsdämpfungseinrichtung (18) umfasst, die dazu eingerichtet ist, Schwingungen zu dämpfen, die von dem aktiven Rad (8) und dem Abstützrad (7) auf die Plattform (3) und umgekehrt übertragen werden.

8. Das Unterflurwartungsfahrzeug (100) nach einem der vorstehenden Ansprüche, **dadurch gekennzeichnet, dass** das Unterflurwartungsfahrzeug (100) mindestens drei Paare von Tragarmen (5) umfasst, wobei mindestens zwei aktive Räder (8), die entlang der Länge (l) der Plattform (3) beabstandet angeordnet sind, angetriebene Räder sind.

9. Das Unterflurwartungsfahrzeug (100) nach Anspruch 8, **dadurch gekennzeichnet, dass** der Abstand zwischen den aktiven Rädern (8) und den Abstützrädern (7) aufeinanderfolgender Tragarme (5) entlang der Länge (l) der Plattform (3) mindestens 0,5 Meter beträgt.

10. Das Unterflurwartungsfahrzeug (100) nach Anspruch 8 oder 9, **dadurch gekennzeichnet, dass** die Plattform (3) durch einen ersten Teil (19), der mindestens zwei Paare von Tragarmen (5) umfasst, und durch einen zweiten Teil (20), der mindestens ein Paar von Tragarmen (5) umfasst, gebildet wird.

11. Das Unterflurwartungsfahrzeug (100) nach Anspruch 10, **dadurch gekennzeichnet, dass** ein Verbindungsmechanismus zwischen dem ersten Teil (19) der Plattform (3) und dem zweiten Teil (20) der Plattform (3) dazu eingerichtet ist, den zweiten Teil (20) der Plattform (3) auf den ersten Teil (19) der Plattform (3) zu klappen.

12. Das Unterflurwartungsfahrzeug (100) nach Anspruch 10 oder 11, **dadurch gekennzeichnet, dass** der erste Teil (19) der Plattform (3) und der zweite Teil (20) der Plattform (3) dazu eingerichtet sind, lösbar miteinander verbunden zu werden.

13. Ein Verfahren zum Bewegen entlang eines Schienenstrangs (2) unter Verwendung des Unterflurwartungsfahrzeugs (1, 100) nach einem der Ansprüche 1 bis 7 und eines Schienenstrangs (2), umfassend zwei Schienen (10), die sich im Wesentlichen parallel zueinander erstrecken und durch die Spurweite (g) des Schienenstrangs (2) beabstandet sind, wobei ein Schienenbefestigungselement (21) oder ein ähnliches Hindernis an einer der Schienen (10) angeordnet ist, wobei das Verfahren die folgenden Schritte umfasst:
S1: Das Unterflurwartungsfahrzeug (1, 100) nähert sich dem Befestigungselement (21);
S2: Das Unterflurwartungsfahrzeug (1, 100) zieht einen ersten Tragarm (5) zurück, der sich am nächsten an dem Befestigungselement (21) befindet;
S3: Das Unterflurwartungsfahrzeug (1, 100) bewegt sich in Vorwärtsrichtung;
S4: Das Unterflurwartungsfahrzeug (1, 100) fährt den derzeit zurückgezogenen Tragarm (5) aus;
S5: Das Unterflurwartungsfahrzeug (1, 100) zieht den nachfolgenden Tragarm (5) zurück;
S6: Das Unterflurwartungsfahrzeug (1, 100) bewegt sich in Vorwärtsrichtung;
S7: Das Unterflurwartungsfahrzeug (1, 100) wiederholt die Schritte S4 bis S6 für jeden weiteren nachfolgenden Tragarm (5).

14. Ein Verfahren zum Bewegen entlang eines Schienenstrangs (2) unter Verwendung des Unterflurwartungsfahrzeugs (1, 100) nach einem der Ansprüche 8 bis 12 und eines Schienenstrangs (2), umfassend zwei Schienen (10), die sich im Wesentlichen parallel zueinander erstrecken und durch die Spurweite (g) des Schienenstrangs (2) beabstandet sind, wobei ein Schienenbefestigungselement (21) oder ein ähnliches Hindernis an einer der Schienen (10) angeordnet ist, wobei das Verfahren die folgenden Schritte umfasst:
S1: Das Unterflurwartungsfahrzeug (100) nähert sich den Befestigungselementen (21) an den Schienen (10) des Schienenstrangs (2);
S2: Das Unterflurwartungsfahrzeug (100) zieht ein erstes Paar Tragarme (5) zurück, die sich am nächsten an den Befestigungselementen (21) befinden;
S3: Das Unterflurwartungsfahrzeug (100) bewegt sich in Vorwärtsrichtung;
S4: Das Unterflurwartungsfahrzeug (100) fährt das aktuell eingezogene Paar Tragarme (5) aus;
S5: Das Unterflurwartungsfahrzeug (100) zieht das nachfolgende Paar Tragarme (5) ein;
S6: Das Unterflurwartungsfahrzeug (100) bewegt sich in Vorwärtsrichtung;
S7: Das Unterflurwartungsfahrzeug (100) wiederholt die Schritte S4 bis S6 für jedes weitere nachfolgende Paar Tragarme (5).

15. Ein Verfahren zum Bewegen entlang des Schienenstrangs (2) nach Anspruch 13 oder 14, **dadurch gekennzeichnet, dass** sich ein Zug auf dem Schienenstrang (2) befindet, wobei das Unterflurwartungsfahrzeug (1, 100) den Unterboden des Zuges mittels der Wartungseinheit (4) wartet, wenn sich das Unterflurwartungsfahrzeug (1, 100) unterhalb des Zuges befindet.

## Revendications

1. Véhicule de maintenance de train de roulement (1, 100) pour la maintenance du soubassement de trains, dans lequel le véhicule de maintenance de train de roulement (1, 100) est configuré pour être déplaçable sur une voie ferrée (2) comportant deux rails (10), lesquels s'étendent parallèlement entre eux et sont espacés par un écartement (g), le véhicule de maintenance de train de roulement (1, 100) comprenant :
- une plateforme (3) présentant une largeur (w),
- une unité de maintenance (4) accouplée à la plateforme (3) et configurée pour effectuer des opérations d'entretien au niveau du soubassement de trains, et
- situées le long d'une longueur (1) de la plateforme (3), au moins deux paires de bras de support (5) s'étendant substantiellement dans la direction de largeur, laquelle est perpendiculaire à la voie ferrée (2) lorsqu'elle est utilisée dans un système de rails (6), chaque bras de support (5) comprenant :
- une roue de support (7) configurée pour tourner librement autour d'un axe de rotation,
- une roue active (8) configurée pour tourner autour d'un axe de rotation,
dans lequel les bras de support (5) sont conçus pour accoupler les roues de support (7) et les roues actives (8) à la plateforme (3),
dans lequel au moins deux roues actives (8) sont des roues entraînées motorisées,
**caractérisé en ce que**
les roues actives (8) sont configurées pour toucher un patin (9) d'un rail (10) de la voie ferrée (2),
les roues de support (7) sont configurées pour toucher un côté inférieur d'une tête de rail (11) du rail (10), et
**en ce qu'**il est prévu un mécanisme de rétraction (12) pour chaque bras de support (5), lequel est configuré pour rétracter les bras de support (5) vers la plateforme (3).

2. Véhicule de maintenance de train de roulement (1, 100) selon la revendication 1, **caractérisé en ce que** l'unité de maintenance (4) comprend un système d'inspection (13) adapté pour effectuer une inspection du soubassement de trains.

3. Véhicule de maintenance de train de roulement (1, 100) selon la revendication 2, **caractérisé en ce que** le système d'inspection (13) comprend en outre un dispositif de déplacement (14) configuré pour déplacer le système d'inspection.

4. Véhicule de maintenance de train de roulement (1, 100) selon l'une quelconque des revendications précédentes, **caractérisé en ce que** l'unité de maintenance (4) comprend un système de manipulation (15) configuré pour interagir mécaniquement avec le soubassement de trains.

5. Véhicule de maintenance de train de roulement (1, 100) selon l'une quelconque des revendications précédentes, **caractérisé en ce que** le véhicule de maintenance de train de roulement (1, 100) comprend en outre une unité de détection (16) configurée pour détecter un élément de fixation de rail (21) ou un autre obstacle à proximité du véhicule de maintenance de train de roulement (1, 100).

6. Véhicule de maintenance de train de roulement (1, 100) selon l'une quelconque des revendications précédentes, **caractérisé en ce que** le mécanisme de rétraction (12) comprend une section télescopique (17), laquelle est réglable sur la totalité de sa longueur.

7. Véhicule de maintenance de train de roulement (1, 100) selon l'une quelconque des revendications précédentes, **caractérisé en ce que** chaque bras de support (5) comprend en outre un moyen d'amortissement de vibrations (18) configuré pour amortir des vibrations transmises à partir de la roue active (8) et de la roue de support (7) à la plateforme (3) et vice versa.

8. Véhicule de maintenance de train de roulement (100) selon l'une quelconque des revendications précédentes, **caractérisé en ce que** le véhicule de maintenance de train de roulement (100) comprend au moins trois paires de bras de support (5), dans lequel au moins deux roues actives (8) placées de façon espacée le long de la longueur (1) de la plateforme (3) sont des roues entraînées motorisées.

9. Véhicule de maintenance de train de roulement (100) selon la revendication 8, **caractérisé en ce que** la distance entre les roues actives (8) et les roues de support (7) de bras de support (5) consécutifs le long de la longueur (1) de la plateforme (3) mesure au moins 0,5 mètres.

10. Véhicule de maintenance de train de roulement (100) selon la revendication 8 ou 9, **caractérisé en ce que** la plateforme (3) est constituée d'une première partie (19) comprenant au moins deux paires de bras de support (5) et d'une deuxième partie (20) comprenant au moins une paire de bras de support (5).

11. Véhicule de maintenance de train de roulement (100) selon la revendication 10, **caractérisé en ce qu'**un mécanisme de connexion entre la première partie (19) de la plateforme (3) et la deuxième partie (20) de la plateforme (3) est configuré pour plier la deuxième partie (20) de la plateforme (3) par-dessus la première partie (19) de la plateforme (3).

12. Véhicule de maintenance de train de roulement (100) selon la revendication 10 ou 11, **caractérisé en ce que** la première partie (19) de la plateforme (3) et la deuxième partie (20) de la plateforme (3) sont configurées de manière à pouvoir être fixées de façon détachable l'une à l'autre.

13. Procédé de déplacement le long d'une voie ferrée (2) à l'aide du véhicule de maintenance de train de roulement (1, 100) selon l'une quelconque des revendications 1 à 7 et d'une voie ferrée (2) comprenant deux rails (10) s'étendant substantiellement parallèlement entre eux et espacés par l'écartement (g) de la voie ferrée (2), dans lequel un élément de fixation de rail (21) ou un obstacle similaire est disposé sur l'un des rails (10), le procédé comprenant les étapes suivantes :
S1 : le véhicule de maintenance de train de roulement (1, 100) se rapproche de l'élément de fixation (21) ;
S2 : le véhicule de maintenance de train de roulement (1, 100) rétracte un premier bras de support (5) situé le plus près de l'élément de fixation (21) ;
S3 : le véhicule de maintenance de train de roulement (1, 100) se déplace dans une direction vers l'avant ;
S4 : le véhicule de maintenance de train de roulement (1, 100) étend le bras de support (5) actuellement rétracté ;
S5 : le véhicule de maintenance de train de roulement (1, 100) rétracte le bras de support (5) suivant ;
S6 : le véhicule de maintenance de train de roulement (1, 100) se déplace dans la direction vers l'avant ;
S7 : le véhicule de maintenance de train de roulement (1, 100) répète les étapes S4 à S6 pour chaque bras de support (5) suivant.

14. Procédé de déplacement le long d'une voie ferrée (2) à l'aide du véhicule de maintenance de train de roulement (100) selon l'une quelconque des revendications 8 à 12 et d'une voie ferrée (2) comprenant deux rails (10) s'étendant substantiellement parallèlement entre eux et espacés par l'écartement (g) de la voie ferrée (2), dans lequel un élément de fixation de rail (21) ou un obstacle similaire est disposé sur les deux rails (10), le procédé comprenant les étapes suivantes :
S1 : le véhicule de maintenance de train de roulement (100) se rapproche des éléments de fixation (21) sur les rails (10) de la voie ferrée (2) ;
S2 : le véhicule de maintenance de train de roulement (100) rétracte une première paire de bras de support (5) située le plus près des éléments de fixation (21) ;
S3 : le véhicule de maintenance de train de roulement (100) se déplace dans la direction vers l'avant ;
S4 : le véhicule de maintenance de train de roulement (100) étend la paire de bras de support (5) actuellement rétractée ;
S5 : le véhicule de maintenance de train de roulement (100) rétracte la paire de bras de support (5) suivante ;
S6 : le véhicule de maintenance de train de roulement (100) se déplace dans la direction vers l'avant ;
S7 : le véhicule de maintenance de train de roulement (100) répète les étapes S4 à S6 pour chaque paire de bras de support (5) suivante.

15. Procédé de déplacement le long de la voie ferrée (2) selon la revendication 13 ou 14, **caractérisé en ce qu'**un train se trouve sur la voie ferrée (2), dans lequel le véhicule de maintenance de train de roulement (1, 100) effectue un entretien du soubassement du train au moyen de l'unité de maintenance (4) lorsque le véhicule de maintenance de train de roulement (1, 100) se trouve sous le train.
